# EUROPEAN PATENT SPECIFICATION

(11) **EP 0 618 727 B1**
(45) Date of publication and mention of the grant of the patent: **17.03.1999**
(21) Application number: 93922626.2
(22) Date of filing: 13.10.1993
(51) Int. Cl.: H04N 7/24

(54) **ENCODER AND DECODER**
CODIERER UND DECODIERER
CODEUR ET DECODEUR

(30) Priority: 15.10.1992 JP 277384/92
(43) Date of publication of application: 05.10.1994
(73) Proprietor: SONY CORPORATION, Tokyo 141 (JP)
(72) Inventor: KONDO, Tetsujiro, Shinagawa-ku, Tokyo 141 (JP); TAKAHASHI, Kenji, Shinagawa-ku, Tokyo 141 (JP)
(74) Representative: Cotter, Ivan John
(86) International application number: JP9301470
(87) International publication number: WO9409594

(56) References cited:
- EP-A- 0 339 589
- EP-A- 0 373 924
- DE-A- 3 109 795
- JP-A- 1 162 080
- IEEE INTERNATIONAL CONFERENCE ON COMMUNICATIONS ICC '90, vol.3, April 1990, ATLANTA, GA, US pages 1035 - 1042, XP000145988 TAKAHASHI ET AL 'ROBUSTNESS OF DATA COMPRESSION CODING SCHEMES FOR STILL PICTURES OVER NOISY CHANNELS'
- PATENT ABSTRACTS OF JAPAN vol. 16, no. 221 (E-1205) 22 May 1992 & JP-A-04 037 367 (FUJITSU GENERAL LIMITED) 7 February 1992
- Broadcast Engineering, May 1992 (Tokyo), SHUICHI MATSUMOTO, "Trend of TV digital coding technology", p. 70-89, Figs. 4, 5.

## Description

### TECHNICAL FIELD

The present invention relates to an encoder and a decoder which are, for example, suitable to a CODEC or the like for encoding and compressing information and for decoding compressed information to original information.

### BACKGROUND ART

Heretofore, an apparatus called "CODEC" has been proposed. The CODEC is an apparatus for encoding and compressing image data at the time of transmission or recording of image data. The encoding of image data has been standardized on the basis of video CODEC (coder and encoder) recommendation H.261 which was concluded by International Telegraph and Telephone Consultative Committee (CCITT) under the control of International Telecommunication Union (ITU) in December 1990. Dynamic image encoding is used, for example, in the fields of broadcasting, communication, and so on, for the purpose of transmitting a signal to a remote place with a standard television or a high definition (HD) television used as a signal source and, for example, in the fields of storage, and so on, for the purpose of local signal processing. As a video format based on the recommendation H.261, there is a common intermediate format (CIF) by which regional differences in television system (in the whole world) are exemplified to make communications between CODECs possible.

The resolution of an image based on the CIF is 352 dots in horizontal direction and 288 dots in vertical direction.

An encoding portion of a video CODEC generally encodes input video data through an encoder, multiplex-encodes the data and once stores the data in a transmission buffer. Then, the encoding portion encodes the stored data through a transmission encoder and transmits the data as an encoded bit string. A decoding portion thereof decodes the transmitted and encoded bit string video data through a transmission decoder and once stores the data in a reception buffer. Then, the decoding portion multiplex-decodes the data and decodes the data to obtain an original video signal. In the case of transmission of such a large quantity of image data, the image data is encoded and compressed at the time of transmission thereof, and the encoded and compressed image data is decoded at the time of reception thereof. Accordingly, the video CODEC can be used not only at the time of transmission of an image but at the time of recording of image data, for example, in a VTR. Particularly, image data of a high definition television type which has been rapidly advanced recently requires a large quantity of data different from the image data of a standard television type. A subject essential to remarkable reduction in recording cost is therefore to encode and compress data at the time of recording and decode the data to obtain original image data at the time of reproduction:

As one of television signal processing methods in the CODEC, there are known some methods by which the average number of bits per pixel or sampling frequency is reduced in order to narrow the transmission band. As an encoding method for reducing the sampling frequency, there has been proposed a method in which: image data are thinned to half by sub-sampling; and sub-sampling points and a flag for indicating the position of a sub-sampling point used at the time of interpolation are transmitted. That is, the flag indicating what sampling point data is selected from sampling points in the upper and lower positions or left and right positions of an interpolation point, is transmitted. As an encoding method for reducing the average number of bits per pixel, there is known a DPCM (differential PCM). In the DPCM, a signal of difference between adjacent pixels is quantized and transmitted on the basis of the fact that the correlation between pixels in a television signal is high and that the difference between pixels in the vicinity is small. As another encoding method for reducing the average number of bits per pixel, there is a method in which a one-field screen is subdivided into fine blocks so that an average value and a standard deviation at every block and a one-bit encoded code for every pixel are transmitted. In the encoding method to reduce sampling frequency by using sub-sampling, there is a risk that aliasing distortion may occur because sampling frequency is reduced to half. The DPCM has a problem that errors propagate to decoding after errors are generated. In the method for performing encoding at a block unit, there arises a disadvantage that block distortion occurs in the boundary between blocks.

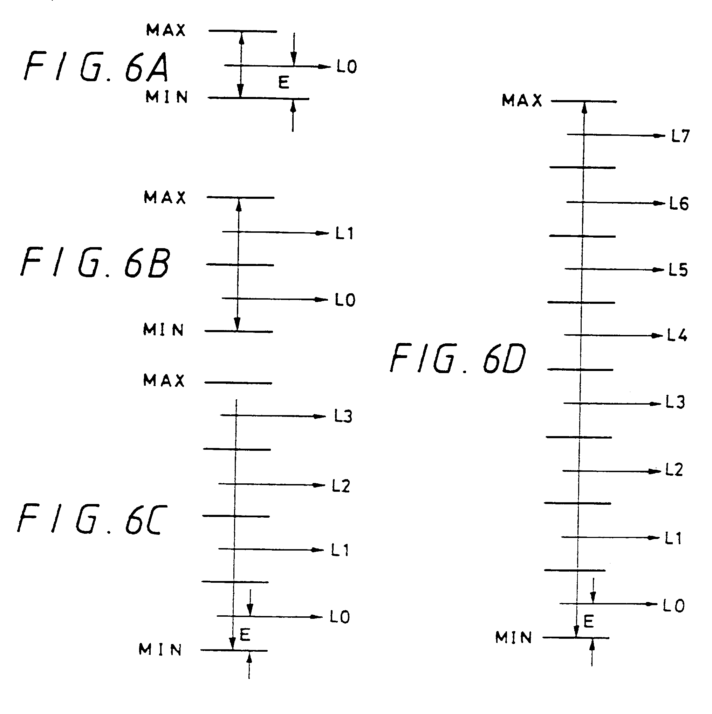

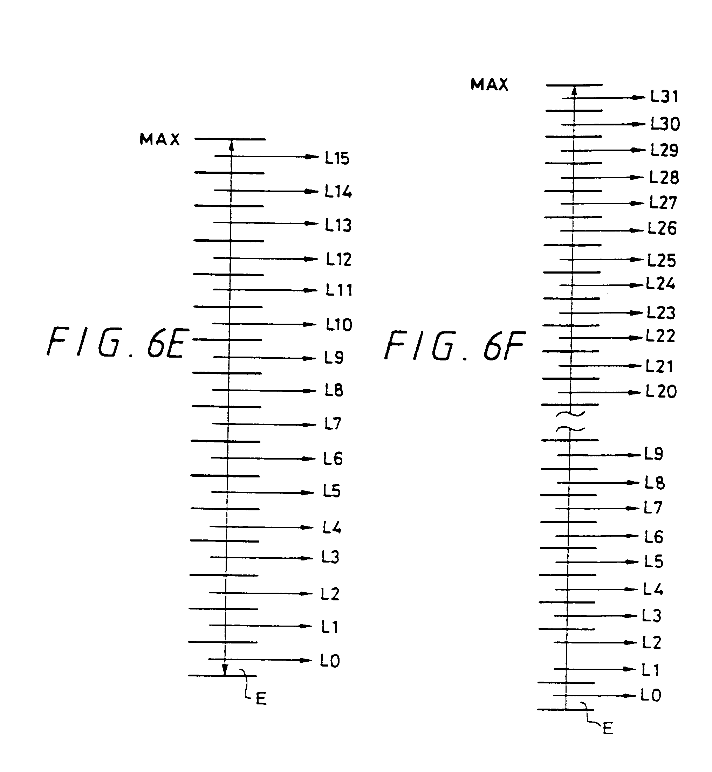

Therefore, the applicant of the present invention has proposed a high-efficient coding apparatus in which a dynamic range determined on the basis of the maximum and minimum values of a plurality of pixels contained in a two-dimensional block is calculated so that encoding is performed in a variable bit length corresponding to the dynamic range (see Japanese Patent Laid-Open Publication No. 61-144989). FIG. 6 is used for explaining the variable bit length coding suitable to the dynamic range previously proposed, that is, for explaining an adaptive dynamic range coding (ADRC). For example, the dynamic range is calculated at every two-dimensional block composed of (4 lines × 4 pixels = 16 pixels). The minimum level (minimum value) in the block is removed from input pixel data having 8 bits as one sample. Pixel data after removal of the minimum value is quantized. The quantization is a process for converting the pixel data after removal of the minimum value into a representative level data. The maximum permissible value to quantizing distortion generated at the time of the quantization (hereinafter referred to as "maximum distortion") is set to a predetermined value, for example, 4. FIG. 6A shows the case where the dynamic range (the difference between the maximum value MAX and the minimum value MIN) is 8. In the case of (DR=8), the level 4 at the center is selected as the representative level L0, and (maximum distortion E=4) holds. That is, in the case of (0≤DR≤8), the center level of the dynamic range is selected as the representative level, so that there is no necessity of transmitting quantized data. Accordingly, the required bit length Nb is 0. In the reception side, such a decoding is performed that the representative level L0 is used as a restoration or reconstructed value on the basis of the minimum value MIN and dynamic range of the block.

FIG. 6B shows the case of (DR=17). In this case, representative levels (L0=4) and (L1=13) are determined respectively, so that the maximum distortion E is 4. Because there are two representative levels L0 and L1, the (Nb=1) is selected. In the case of (9≤DR≤17), the (Nb=1) is selected. The maximum distortion E decreases as the dynamic range is narrowed.

FIG. 6C shows the case of (DR=35). In this case, representative levels (L0=4), (L1=13), (L2=22) and (L3=31) are determined respectively, so that the (E=4) is established. Because there are four representative levels L0 to L3, the (Nb=2) is selected. In the case of (18≤DR≤35), the (Nb=2) is selected. In the case of (36≤DR≤71), eight representative levels (L0 to L7) are used. FIG. 6D shows the case of (DR=71). In this case, representative levels (L0=4), (L1=13), (L2=22), (L3=31), (L4=40), (L5=49), (L6=58) and (L7=67) are determined respectively. For discrimination among the eight representative levels L0 to K7, the (Nb=3) is selected. In the case of (72≤DR≤143), sixteen representative levels (L0 to L15) are used. FIG. 6E shows the case of (DR=143). In this case, representative levels are set to (L8=76), (L9=85), (L10=94), (L11=103), (L12=112), (L13=121), (L14=130) and (L15=139) (in addition to the representative levels L0 to L7 which are set to values as explained above). For discrimination among the sixteen representative levels (L0 to L15), the (Nb=4) is selected. In the case of (144≤DR≤287), 32 representative levels (L0 to L31) are used. FIG. 6F shows the case of (DR=287). In this case, representative levels are set to (L16=148), (L17=157), (L18=166), (L19=175),... (L27=247), (L28=256), (L29=265), (L30=274) and (L31=283) (in addition to the representative levels L0 to L15 which are set to values as explained above). For discrimination among the 32 representative levels (L0 to L31), the (Nb=5) is selected. Because, in practice, input pixel data are quantized by 8 bits, the maximum value of the dynamic range is 255. Accordingly, the input pixel data are not quantized to the representative levels (L28 to L31).

Because television signals in one block have a three-dimensional correlation with respect to the two dimensions of horizontal and vertical directions and the dimension of a time direction, the width of the level change of pixel data contained in one and the same block is small in a stationary portion. Accordingly, even in the case where the dynamic range of data DT1 after removal of the minimum level MIN common to pixel data in one block is quantized by a smaller number of quantization bits than the original number of quantization bits, almost no quantizing distortion occurs. By reducing the number of quantization bits, the width of the data transmission band can be set to be smaller than the original width.

By the way, in a coding apparatus applied to a dynamic range in the case of the above variable bit length, the maximum permissible distortion E is determined, for example, to 4. If the value of the maximum distortion E is selected to be larger, the bit length Nb can be reduced further so that the compressibility can be heightened. However, if the maximum distortion E is selected to be larger, block distortion occurs. Therefore, the applicant of the present application has further proposed a high-efficient coding apparatus in which when the bit length Nb is determined, the maximum distortion is not fixed but changed relative to the dynamic range by nonlinear characteristic which matches with human visual characteristic to thereby make the bit length Nb smaller to thereby make it possible to heighten the compressibility without generating deterioration in the restoration image, such as block distortion (See Japanese Patent Laid-Open Publication No. 62-266989).

In the high-efficient coding apparatus using the ADRC system under the consideration of a recording system of a VTR, compression using a variable length code is not performed. As known well, the compression using the variable length coding such as run length limited coding is a method in which information compression is performed by using information indicating how long one data is continued. In the case where the variable length coding is carried out, original data cannot be restored when errors are generated. As described above, in the case where variable length code is used in the ADRC method under the consideration of a recording system of a VTR, original data cannot be restored when errors are generated. Accordingly, variable length coding with a high compressing efficiency cannot be employed, so that there arises a disadvantage that compressibility cannot be improved.

The present invention is under the consideration of the aforementioned point of view and has as its object the provision of an encoder and a decoder in which the variable length coding is employed to improve compressing efficiency and in which original data can be restored as sufficiently as possible even in the case where errors are generated.

European Published Patent Application EP-A-0,373,924 discloses an image data compression system in which variable length adaptive dynamic range coding is used followed by a framing process in which the most significant bits for a frame are placed in a predetermined position within each sync block.

German Published Patent Application DE-A-3,109,795 discloses an image data compression system in which quantization is followed by runlength coding of bit planes within the quantised data for an image frame.

### DISCLOSURE OF THE INVENTION

The encoder according to the present invention is defined in claim 1, the decoder is defined in claim 13.

Various aspects of the present invention are set out in the accompanying dependent claims.

### BRIEF DESCRIPTION OF THE DRAWINGS

FIG. 1A is a diagram showing an embodiment of an encoder according to the present invention;
FIG. 13 is a diagram showing an embodiment of an decoder according to the present invention;

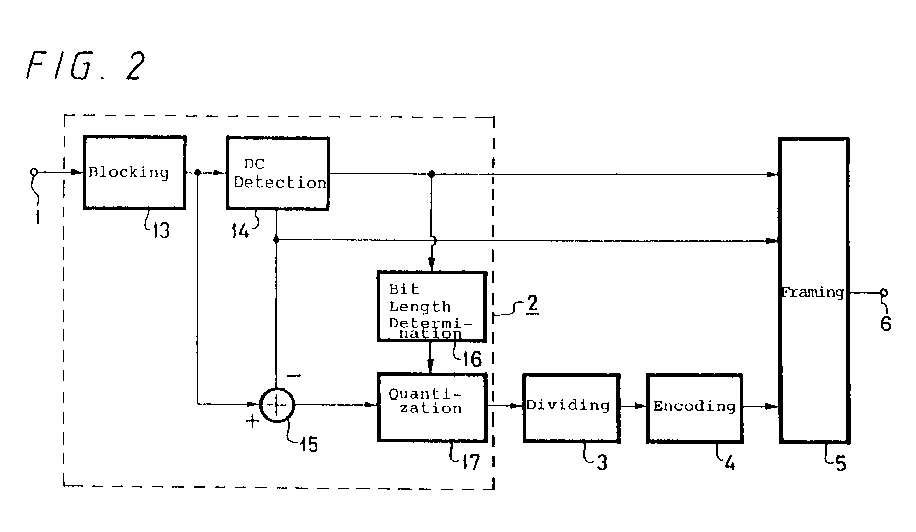

FIG. 2 is a diagram showing an important part of an embodiment of an encoder according to the present invention;

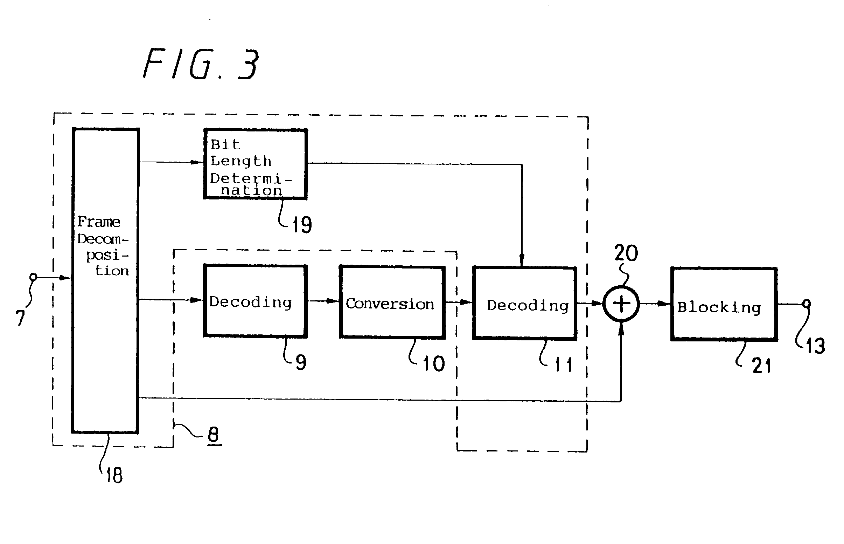

FIG. 3 is a dragram showing an important part of an embodiment of a decoder according to the present invention;

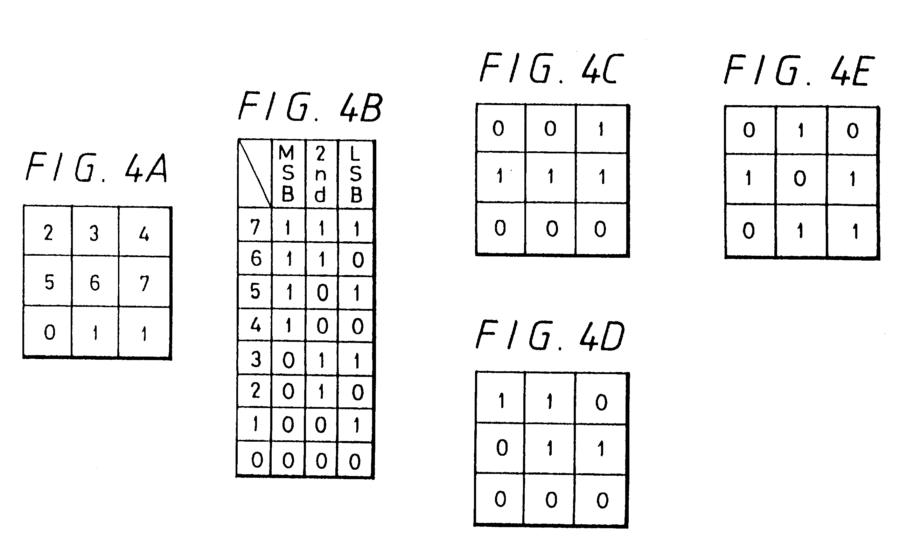

FIG. 4A is an explanatory view showing an example of block data used for explaining an embodiment of an encoder and decoder according to the present invention;
FIG. 4B is an explanatory view showing an example of the case where the block data shown in FIG. 4A is indicated by three bits, for explaining an embodiment of an encoder and a decoder according to the present invention;
FIG. 4C is an explanatory view showing an example of the case where the MSBs shown in FIG. 4B are allocated to a bit plane, for explaining an embodiment of an encoder and a decoder according to the present invention;
FIG. 4D is an explanatory view showing an example of the case where the 2nd MSBs shown in FIG. 4B are allocated to a bit plane, for explaining an embodiment of an encoder and a decoder according to the present invention;
FIG. 4E is an explanatory view showing an example of the case where the LSBs shown in FIG. 4B are allocated to a bit plane, for explaining an embodiment of an encoder and a decoder according to the present invention;

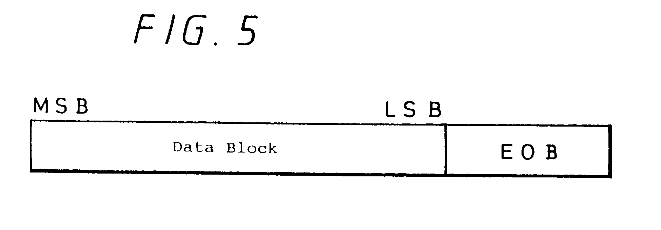

FIG. 5 is an explanatory view for explaining an embodiment of an encoder and a decoder according to the present invention;
FIG. 6A is an explanatory view showing the case where the dynamic range used for explaining ADRC processing is "8";
FIG. 6B is an explanatory view showing the case where the dynamic range used for explaining ADRC processing is "17";
FIG. 6C is an explanatory view showing the case where the dynamic range used for explaining ADRC processing is "35";
FIG. 6D is an explanatory view showing the case where the dynamic range used for explaining ADRC processing is "71";
FIG. 6E is an explanatory view showing the case where the dynamic range used for explaining ADRC processing is "143"; and
FIG. 6F is an explanatory view showing the case where the dynamic range used for explaining ADRC processing is "287".

### BEST MODE FOR CARRYING OUT THE INVENTION

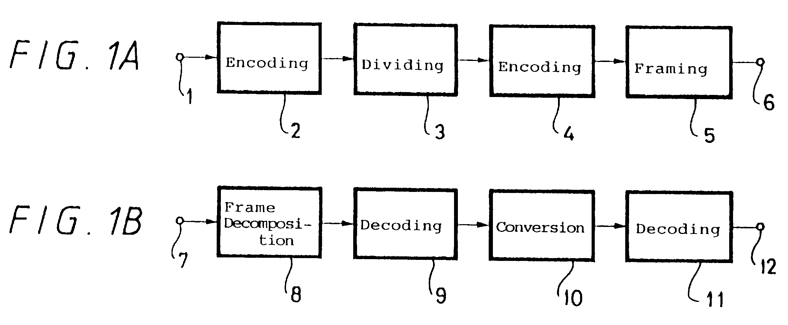

FIG. 1A shows an encoder. In FIG. 1 the reference numeral 1 designates an input terminal supplied with image data (digital television signal) which are, for example, given from a recording system of a not-shown VTR and, for example, quantized so that one sample forms eight bits. The image data from the input terminal 1 are supplied to an encoding circuit 2. For example, the encoding circuit (ADRC: adaptive dynamic range coding circuit) 2 divides the image data supplied through the input terminal 1 into two-dimensional blocks of a predetermined unit, calculates a dynamic range determined on the basis of the maximum and minimum values of a plurality of pixels contained in the divided two-dimensional blocks and performs encoding with a variable bit length suited to the dynamic range. The thus encoded image data (hereinafter referred to as "block data") are supplied to a dividing circuit 3.

FIG. 5 shows an example of the block data generated by the encoding. As shown in FIG. 5, one block data is, for example, composed of a data block and a code block called "end-of-block (EOB)" indicating the end of one block. The data block is composed of MSB, 2nd SB,..., and LSB. When such a block data is supplied to the dividing circuit 3, the dividing circuit 3 divides the block data into bit planes. As described above with reference to FIG. 5, the bit planes used herein mean bit planes for the MSB, 2nd SB,..., and LSB constituting one data block. That is, the division into the bit planes means the division into units for carrying out the following procedures by using the MSB, 2nd SB,..., and LSB respectively.

Referring to FIG. 4, the method for dividing an image data encoded by the ADRC method into bit planes will be described further. FIG. 4A shows image data (block data), for example, processed by the ADRC method. For example, the numerical values shown in FIG. 4A represent levels of the image data. When the block data shown in FIG. 4A is expressed by the three bits of MSB, 2nd MSB and LSB as shown in FIG. 4B, since the MSB is the most significant bit, it takes "1" in the case of a decimal number of "7", "6", "5" or "4" and takes "0" in the case of a decimal number of "3", "2", "1" or "0"; since the 2nd MSB is the second significant bit, it takes "1" in the case of decimal numbers of "7", "6", and "3", "2" and takes "0" in the case of a decimal number of "5", "4" and "1", "0"; and since the LSB is the least significant bit, it takes "1" in the case of a decimal number of "7", "5", "3" or "1" and takes "0" in the case of a decimal number of "6", "4", "2" or "0".

Accordingly, when the block data is divided into bit planes in accordance with the levels as shown in FIG. 4A, the MSB takes "1" in the portions corresponding to "4", "5", "6" and "7" in FIG. 4A and takes "0" in the other portions, that is, the values as shown in FIG. 4C are obtained. Next, the 2nd MSB takes "1" in the portions corresponding to "7", "6", "3" and "2" in FIG. 4A and takes "0" in the other portions, that is, the values as shown in FIG. 4D are obtained. Next, the LSB takes "1" in the portions corresponding to "1", "3", "5" and "7" in FIG. 4A and takes "0" in the other portions, that is, values as shown in FIG. 4E are obtained. In this manner, the block data encoded by the ADRC method is divided into bit plane data.

The bit plane data divided by the diving circuit 3 are supplied to an encoding circuit 4. The encoding circuit 4 processes the bit plane data from the dividing circuit 3 with variable length coding such as run length coding, Huffman coding, or the like, and supplies the bit plane data processed with the variable length coding to a framing circuit 5. In this embodiment, run length coding is carried out before Huffman coding processing is carried out. This is because better coding efficiency can be obtained in the case where run length coding is carried out before Huffman coding processing.

The framing circuit 5 carries out an error correction coding process on the bit plane data from the encoding circuit 4, further adds a synchronizing signal thereto to obtain transmission data (or recording data) and supplies the data through an output terminal 6, for example, to a recording system of a not shown VTR. In this occasion, the MSB bit plane data processed with the variable length coding is arranged prior to the other, 2nd MSB and LSB bit plane data and at the same time the position of the MSB bit plane data is decided in advance so that recording is performed in a regular arrangement. In this manner, the influence of error propagation can be lowered. In the case of run length coding, because data after data in which an error has been generated cannot be used at all, the MSB bit plane which most directly determines general flows is arranged at the head to thereby minimize the influence by the error. Although the same work as described above can be carried out even in the case where the number of quantized bits allocated to every block is changed, there is no MSB plane in the case where the number of allocation bits is "0". Accordingly, in this case, data which are encoded so that the MSB plane data are all "0" may be transmitted or data in which the above plane data 'correspond to "0" bits' may be transmitted. Because there is a difference in data sequence between the bit plane in the vicinity of the MSB and the bit plane in the vicinity of the LSB, more efficient coding can be made when coding patterns are switched, for example, by changing coding tables. This is because, in Huffman coding and run length coding, the MSB bit plane data are used for understanding the general flows whereas the LSB bit plane data change delicately.

Accordingly, for example, only the MSB bit plane may be subjected to coding and the 2nd MSB and LSB bit planes are not subjected to coding. Alternatively, the MSB and 2nd MSB bit planes may be subjected to coding selectively and the LSB bit plane is not subjected to coding. Further, bit shifting may be carried out. By the aforementioned procedures, strength against errors can be provided. In a recording system of a VTR, the data from the framing circuit 5 are processed by various recording processes such as amplification, modulation, etc. and then recorded on a magnetic tape not shown to form slant tracks thereon.

Referring next to FIG. 2, the encoder shown in FIG. 1A will be described more in detail. In FIG. 2, parts corresponding to those in FIG. 1A are marked with the same reference numerals and detailed description about them is omitted here. As shown in FIG. 2, image data which are for example, quantized so that one sample forms eight bits are supplied to the input terminal 1. The image data are then supplied to a blocking circuit 13. The reference numeral 13 designates a blocking circuit and this blocking circuit 13 converts the input image data into a continuous signal at every two-dimensional block which is a coding unit. In this embodiment, the size of one block is, for example, selected to be (4 lines × 4 pixels = 16 pixels). The image data (pixel data) processed by the blocking circuit 13 are supplied to a dynamic range (DR) detection circuit 14 and to an addition circuit 15. The dynamic range detection circuit 14 detects the dynamic range and the minimum value of the pixel data from the blocking circuit 13 at every block and the minimum value data are supplied to the addition circuit 15 and to the framing circuit 5 and at the same time the dynamic range data are supplied to a bit length determination circuit 16 and to the framing circuit 5.

The addition circuit 15 subtracts the minimum value data of the dynamic range detection circuit 14 from the image data of the blocking circuit 13 and supplies the result of subtraction to a quantizing circuit 17. On the other hand, the bit length determination circuit 16 determines the number of quantized bits (bit length) in accordance with the dynamic range. In this case, the bit length is determined under the consideration of human visual characteristic. That is, in the case of a wide dynamic range, the maximum distortion is selected to be large. As an example, the bit length determination circuit 16 determines the bit length in accordance with the dynamic range as follows. That is, in the case where a dynamic range of from 0 to 10 inclusive is given, the bit length and the maximum distortion are selected to be "0" and "5" respectively. In the case where a dynamic range of from 11 to 25 inclusive is given, the bit length and the maximum distortion are selected to be "1" and "6" respectively. In the case where a dynamic range of from 26 to 99 inclusive is given, the bit length and the maximum distortion are selected to be "2" and "12" respectively. In the case where a dynamic range of from 100 to 255 inclusive is given, the bit length and the maximum distortion are selected to be "3" and "16" respectively.

The bit length data thus determined are supplied to the quantizing circuit 17. The quantizing circuit 17 carries out a quantizing process onto the result of addition by the addition circuit 15, that is, onto the pixel data after removal of the maximum value on the basis of the bit length data obtained by the bit length determination circuit 16 and supplies the data obtained by the quantizing process, that is, encoded codes, to the dividing circuit 3. As explained above with reference to FIG. 1, the dividing circuit 3 divides the encoded codes, that is, the block data, into bit planes and supplies the bit plane data obtained by the division to the encoding circuit 4. As explained above with reference to FIG. 1, the encoding circuit 4 processes the bit plane data from the dividing circuit 3 by variable length coding and the like and supplies the processed data to the framing circuit 5. The framing circuit 5 applies error correction coding to the dynamic range (for example, 8 bits) and minimum data (for example, 8 bits 9) from the dynamic range detection circuit 14 and the block data (encoded codes) from the encoding circuit 4 respectively and also adds a synchronizing signal thereto to obtain recording data or transmission data which are supplied through the output terminal 6 to a recording system of a VTR and the like.

Referring next to FIG. 1B, a decoder in a recording system (a reception system in data transmission or the like) of a VTR will be explained. In FIG. 1B, the reference numeral 7 designates an input terminal which is supplied with reproduction data reproduced by a reproducing system of a not shown VTR or the like. The reproduction data are supplied to a frame decomposition circuit 8 through the input terminal 7. The frame decomposition circuit 8 decomposes the reproduction data supplied through the input terminal 7 into dynamic range and minimum value data and block data (encoded codes) and at the same time carries out an error correcting process onto these data. Then, the data subjected to the error correcting process are supplied to a decoding circuit 9. The decoding circuit 9 decodes the block data from the frame decomposition circuit 8 to obtain bit plane data and supplies the bit plane data to a conversion circuit 10. The conversion circuit 10 carries out a process reverse to the process shown in FIG. 4 onto the bit plane data supplied from the decoding circuit 9 to thereby obtain original block data and supplies the original block data to a decoding circuit 11. The decoding circuit 11 obtains image data (a digital television signal) which are quantized so that one sample forms eight bits, on the basis of the block data, dynamic range and minimum data from the conversion circuit 10 and supplies the image data through an output terminal 12, for example, to a reproducing system of a not shown VTR.

Referring next to FIG. 3, the decoder shown in FIG. 1B will be explained more in detail. In FIG. 3, parts corresponding to those in FIG. 1B are marked with the same reference numerals and the detailed description of them is omitted here. In FIG. 3, a frame decomposition circuit 18 in the frame decomposition circuit 8 separates the reproduction data supplied through the input terminal 7 from a reproducing system of a not shown VTR, into block data (encoded codes), minimum value data and dynamic range data at every bit plane and at the same time carries out an error correcting process onto these data. Thereafter, the block data, the dynamic range data and the minimum value data are supplied to an encoding circuit 9, a bit length determination circuit 19 and an addition circuit 20 respectively. The bit length determination circuit 19 determines the bit length at every block from the dynamic range in the same manner as in the encoder and supplies the bit length data to a decoding circuit 11. The decoding circuit 9 decodes the block data supplied at every bit plane from the frame decomposition circuit 18 to thereby obtain original bit plane data and supplies the bit plane data to a conversion circuit 10. The conversion circuit 10 carries out a process reverse to the process shown in FIG. 4 onto the bit plane data supplied from the decoding circuit 9 to thereby obtain original block data and supplies the block data to the decoding circuit 11. The decoding circuit 11 carries out a process reverse to the process in the quantizing circuit 17 of the encoder. That is, data after removal of the minimum level of 8 bits are decoded into representative level data which are then supplied to the addition circuit 20. The addition circuit 20 adds the data of the decoding circuit 11 and the minimum value data of the frame decomposition circuit 18 to each other to thereby decode original pixel data. The output of the addition circuit 20 is supplied to a block decomposition circuit 21. The block decomposition circuit 21 converts the decoded data of a block sequence into data of the same sequence as the scanning sequence of television signal by a process reverse to the process in the blocking circuit 13 of the encoder, and supplies the data thus obtained by the conversion to a reproducing system of a not shown VTR through an output terminal 13.

As described above, in this embodiment, data encoded by the ADRC method are divided into bit planes at every MSB, 2nd MSB, ..., and LSB, and the data for every bit plane are subjected to run length coding and Huffman coding. Accordingly, it is possible to compress the data with a high compressibility, and, at the same time, it is possible to minimize the degradation of the restoration capability of the data when an error is generated.

Further, at the time of data transmission or data recording, data are transmitted or recorded regularly while block data obtained by encoding bit plane data for MSB is arranged at the head. Accordingly, resistivity against errors can be provided.

Further, patterns of the Huffman coding processing for bit plane data of the MSB and the bit plane data of the LSB are changed, for example, by switching coding tables or the like. Accordingly it is possible to perform coding with a high efficiency.

When, for example, the aforementioned encoder and decoder are applied to an HD (high definition) VTR, it is possible to record image data with a high efficiency and restore (reproduce) recorded data with a high restoration capability.

Although the aforementioned embodiment has shown the case where variable length coding at every block is employed, the invention can be applied to the case where variable length coding at every bit plane is used in the whole screen.

Although the aforementioned embodiment has shown the case where an encoder and a decoder are mounted on a VTR, the same effect as in the embodiment can be achieved when they are applied to a data transmission system such as a television or video conference system.

As described above, in this embodiment, there are provided the encoding circuit 2 which encodes image data by the ADRC method; the dividing circuit 3 which divides block data encoded by the encoding circuit 2 into a plurality of bit planes; the encoding circuit 4 which encodes the data at every bit plane by variable length coding such as run length coding, Huffman coding, and so on; and the framing circuit 5 which adds error correcting codes to the encoded image data. Accordingly, it is possible to achieve a high compressibility, and, at the same time, it is possible to minimize the degradation of the restoration capability of the data when errors are generated.

Further, in this embodiment, the encoding circuit 2 may calculate a dynamic range determined on the basis of the maximum and minimum values of a plurality of pixels contained in a two-dimensional block and may perform encoding in a variable bit length suited to the dynamic range. Accordingly, compressing efficiency can be improved in addition to the aforementioned effect.

Further, in this embodiment, the encoding circuit 4 may perform encoding for a continuous length of pixel information. Accordingly, compressing efficiency can be further improved in addition to the aforementioned effect.

Further, in this embodiment, the encoding circuit 4 may perform encoding by using of statistical characteristic of pixel information. Accordingly, error propagation is not likely performed in addition to the aforementioned effect.

Further, in this embodiment, bit planes may be generated at every block constituted by a predetermined number of pixels. Accordingly, compressing efficiency and compressing accuracy can be improved in addition to the aforementioned effect.

Further, in this embodiment, bit planes may be generated at the screen unit. Accordingly, compressibility can be improved in addition to the aforementioned effect.

Further, in this embodiment, bit shifting may be performed at the time of generating of bit planes. Accordingly, the degradation of the restoration capability of the data can be suppressed when errors are generated.

Further, in this embodiment, the plurality of bit planes may be constituted by at least planes for MSB, n-th MSB and LSB. Accordingly, in addition to the aforementioned effect, it is possible to improve compressing efficiency and at the same time prevent error propagation.

Further, in this embodiment, processing may be made while the plane for MSB in the plurality of bit planes is arranged at the head. Accordingly, the influence by error propagation can be reduced in addition to the aforementioned effect.

Further, in this embodiment, MSBs in the MSB plane may be arranged on the basis of a predetermined rule in terms of time or in terms of space. Accordingly, the influence by error propagation can be reduced in addition to the aforementioned effect.

Further, in this embodiment, the encoding circuit 4 may encode the data so that data in the MSB plane are all "0" when there is no MSB plane. Accordingly, in addition to the aforementioned effect, it is possible to improve compressing efficiency and simplify the process.

Further, in this embodiment, at least information indicating the fact that the number of allocation bits for quantization is "0" may be outputted instead of the MSB plane when there is no MSB plane. Accordingly, in addition to the aforementioned effect, it is possible to improve compressing efficiency and simplify the process.

Further, in this embodiment, the encoding circuit 4 may encode the data on the basis of the information sequence of at least planes for MSB and LSB. Accordingly, resistivity against errors can be provided in addition to the aforementioned effect.

In this embodiment, error correcting is performed by the frame decomposition circuit 8 on the basis of error correcting codes added to the input pixel data; the output of the frame decomposition circuit is decoded by a decoding circuit 9 with run length coding and Huffman coding; a plurality of decoded bit plane data are converted into block data by the conversion circuit 10; and the output of the conversion circuit is decoded by the decoding circuit 11 by the ADRC method so that original image data are obtained. Accordingly, it is possible to restore the encoded data satisfactorily.

Further, in this embodiment, the decoding circuit 9 may decode information encoded for a continuous length of pixel information. Accordingly, data can be restored satisfactorily in addition to the aforementioned effect.

Further, in this embodiment, the decoding circuit 11 may calculate a dynamic range determined on the basis of the maximum and minimum values of a plurality of pixels contained in the two-dimensional block and may decode information encoded in a variable bit length suited to the dynamic range. Accordingly, data can be restored satisfactorily in addition to the aforementioned effect.

Further, in this embodiment, the decoding circuit 9 may decode information encoded by using statistical characteristic of pixel information. Accordingly, in addition to the aforementioned effect, data can be restored satisfactorily even when errors are generated.

Further, in this embodiment, the plurality of bit planes obtained by decoding in the decoding circuit 9 may be subjected to bit shifting. Accordingly, in addition to the aforementioned effect, data can be restored satisfactorily even when errors are generated.

Further, in this embodiment, the plurality of bit planes obtained by decoding in the decoding circuit 9 may be generated at every block constituted by a predetermined number of pixels. Accordingly, in addition to the aforementioned effect, data can be restored satisfactorily even when errors are generated.

Further, in this embodiment, the plurality of bit planes obtained by decoding in the decoding circuit 9 may be generated at the screen unit. Accordingly, in addition to the aforementioned effect, data can be restored satisfactorily even when errors are generated.

Further, in this embodiment, the plurality of bit planes obtained by decoding in the decoding circuit 9 may be constituted by at least planes for MSB, n-th MSB and LSB. Accordingly, in addition to the aforementioned effect, data can be restored satisfactorily even when errors are generated.

Further, in this embodiment, encoded information corresponding to the MSB plane may be decoded first in the same block or in the same screen by the first decoding circuit 9. Accordingly, in addition to the aforementioned effect, data can be restored satisfactorily even when errors are generated.

Further, in this embodiment, MSBs in the MSB plane in the plurality of planes decoded by the decoding circuit 9 may be arranged on the basis of a predetermined rule in terms of time or in terms of space. Accordingly, in addition to the aforementioned effect, data can be restored satisfactorily even when errors are generated.

Further, in this embodiment, at least the fact that the number of allocation bits for quantization is "0" may be recognized in the decoder side when data in the MSB plane obtained by decoding in the decoding circuit 9 are all "0". Accordingly, in addition to the aforementioned effect, the data restoring process can be simplified.

Further, in this embodiment, at least information indicating the fact that the number of allocation bits for quantization is "0" may be inputted and recognized when there is no information corresponding to the MSB plane to be decoded by the decoding circuit 9. Accordingly, in addition to the aforementioned effect, the data restoring process can be simplified.

Further, in this embodiment, the decoding circuit 11 may decode the data on the basis of the information sequence of at least planes for MSB and LSB among the plurality of planes obtained by decoding in the decoding circuit 9. Accordingly, in addition to the aforementioned effect, data can be restored satisfactorily even when errors are generated.

### Explanation of Reference Numerals

- 2: encoding circuit
- 3: dividing circuit
- 4: encoding circuit
- 5: framing circuit
- 8: frame decomposition circuit
- 9: decoding circuit
- 10: conversion circuit
- 11: decoding circuit
- 13: blocking circuit
- 14: dynamic range (DR) detection circuit
- 15: addition circuit
- 16: bit length detection circuit
- 18: frame decomposition circuit
- 19: bit length determination circuit
- 20: addition circuit
- 21: block decomposition circuit

## Claims

1. An encoder comprising:
a first encoding means (2) for encoding pixel information by a first method to effect data compression, said first method used in said first encoding means being calculating a dynamic range determined on the basis of maximum (MAX) and minimum (MIN) values of a plurality of pixels contained in a two-dimensional block and encoding said pixel information with a variable bit length suited to the dynamic range;
a dividing means (3) for dividing the pixel information encoded by said first encoding means into a plurality of bit planes;
an error correcting code addition means (5) for adding an error correcting code to encoded image information; characterised by
a second encoding means (4) for performing encoding by a second method to effect data compression at each of a plurality of bit planes generated by said dividing means, said second method being variable length coding and using coding parameters that vary depending upon which bit plane is being encoded; and characterised in that
said error correction code is added to said encoded image data compressed by said second encoding means.

2. An encoder as claimed in Claim 1, wherein said second method used in said second encoding means is encoding for a continuous length of pixel information.

3. An encoder as claimed in Claim 1, wherein said second method used in said second encoding means is encoding by using statistical characteristic of pixel information.

4. An encoder as claimed in Claim 1, wherein generation of said bit planes is carried out at every block constituted by a predetermined number of pixels.

5. An encoder as claimed in Claim 1, wherein generation of said bit planes is carried out at a frame unit.

6. An encoder as claimed in claim 1, wherein bit shifting is performed at the time of the generation of said bit planes.

7. An encoder as claimed in claim 1, wherein said plurality of bit planes are composed of at least a plane constituted by a MSB, a plane constituted by an n-th MSBs and a plane constituted by a LSB.

8. An encoder as claimed in claim 7, ,wherein processing is performed with said MSB plane arranged at the head among said plurality of bit planes.

9. An encoder as claimed in claim 7, wherein MSBs in said plane constituted by MSBs are arranged in terms of time or space in accordance with a predetermined rule .

10. An encoder as claimed in claim 7, wherein said second encoding means performs encoding with all data in said plane constituted by MSB made "0" when there is no plane constituted by MSBs.

11. An encoder as claimed in claim 7, wherein at least information indicating the fact that the number of allocation bits for quantization is "0" is outputted instead of said plane constituted by MSBs when there is no plane constituted by MSBs.

12. An encoder as claimed in claim 7, wherein said second encoding means performs encoding at least on the basis of the information sequence of said plane constituted by MSBs and plane constituted by LSBs.

13. A decoder comprising:
an error correcting means (8) for performing error correction on the basis of an error correcting code added to input pixel information;
a first decoding means (9) for decoding an output of said error correcting means by a first method to effect data decompression, said first method being variable length decoding using decoding parameters that vary depending upon which bit plane is being decoded;
a conversion means (10) for converting pixel information of a plurality of bit planes decompressed by said first decoding means into block data and dynamic range data; and
a second decoding means (11) for decoding an output of said conversion means by a second method to effect data decompression and to thereby obtain original image information, said second method used in said second decoding means using block data, and dynamic range data supplied by said conversion means (10).

14. A decoder as claimed in Claim 13, wherein said first method used in said first decoding means is decoding information encoded for a continuous length of pixel information.

15. A decoder as claimed in Claim 13, wherein said first method used in said first decoding means is decoding information encoded by using statistical characteristic of pixel information.

16. A decoder as claimed in Claim 13, wherein said plurality of bit planes obtained by decoding in said first decoding means are formed by bit shifting.

17. A decoder as claimed in Claim 13, wherein said plurality of bit planes obtained by decoding in said first decoding means are generated at every block constituted by a predetermined number of pixels.

18. A decoder as claimed in claim 13, wherein said plurality of bit planes obtained by decoding in said first decoding means are generated at a frame unit.

19. A decoder as claimed in claim 13, wherein said plurality of bit planes obtained by decoding in said first decoding means are composed of at least a plane constituted by MSBs, a plane constituted by n-th MSBs and a plane constituted by LSBs.

20. A decoder as claimed in claim 19, wherein encoded information corresponding to said plane constituted by MSBs is decoded first in one and the same block or in one and the same frame by said first decoding means.

21. A decoder as claimed in claim 19, wherein MSBs in said plane constituted by MSB in said plurality of planes decoded by said first decoding means are arranged in terms of time or space in accordance with a predetermined rule.

22. A decoder as claimed in claim 19, wherein at least the fact that the number of allocation bits for quantization is "0" is recognized in the decoder side when data in said plane constituted by MSBs obtained by decoding in said first decoding means are all "0".

23. A decoder as claimed in claim 19, wherein at least information indicating the fact that the number of allocation bits for quantization is "0" is given and recognized when there is no information corresponding to said plane constituted by MSBs to be decoded by said first decoding means.

24. A decoder as claimed in claim 19, wherein said second decoding means performs decoding on the basis of the information sequence of at least said plane constituted by MSBs and plane constituted by LSBs among said plurality of planes obtained by decoding in said first decoding means.

## Patentansprüche

1. Codierer, mit:
einer ersten Codiereinrichtung (2), um eine Pixelinformation durch ein erstes Verfahren zu codieren, um eine Datenkompression zu bewirken, wobei das erste Verfahren, welches in der ersten Codiereinrichtung verwendet wird, einen dynamischen Bereich berechnet, der auf der Basis von Maximal-(MAX) und Minimal-(MIN) Werten von mehreren Pixeln bestimmt wird, die in einem zweidimensionalen Block enthalten sind, und um die Pixelinformation mit einer variablen Bitlänge zu codieren, die für den dynamischen Bereich geeignet ist;
einer Teilungseinrichtung (3), um die Pixelinformation, die durch die erste Codiereinrichtung codiert wurde, in mehrere Bitebenen zu unterteilen;
einer Fehlerkorrekturcode-Additionseinrichtung (5), um einen Fehlerkorrekturcode zur codierten Bildinformation zu addieren;
gekennzeichnet durch
eine zweite Codiereinrichtung (4), um das Codieren durch ein zweites Verfahren durchzuführen, um eine Datenkompression bei jeder von mehreren Bitebenen, die durch die Teilungseinrichtung erzeugt wurden, zu bewirken, wobei das zweite Verfahren eine variable Längencodierung ist und Codierparameter verwendet werden, die in Abhängigkeit davon variieren, welche Bitebene codiert wird; und dadurch gekennzeichnet ist, daß
der Fehlerkorrekturcode zu den codierten Bilddaten hinzugefügt wird, die durch die zweite Codiereinrichtung komprimiert wurden.

2. Codierer nach Anspruch 1, wobei das zweite Verfahren, welches in der zweiten Codiereinrichtung verwendet wird, das Codieren für eine fortlaufende Pixelinformationslänge ist.

3. Codierer nach anspruch 1, wobei das zweite Verfahren, welches in der zweiten Codiereinrichtung verwendet wird, das Codieren ist, bei dem eine statistische Eigenschaft einer Pixelinformation verwendet wird.

4. Codieren nach Anspruch 1, wobei die Erzeugung der Bitebenen in jedem Block ausgeführt wird, der aus einer vorgegebenen Anzahl von Pixeln besteht.

5. Codierer nach Anspruch 1, wobei die Erzeugung der Bitebenen in einer Rahmeneinheit ausgeführt wird.

6. Codierer nach Anspruch 1, wobei Bit-Verschieben im Zeitpunkt der Erzeugung der Bitebenen durchgeführt wird.

7. Codierer nach Anspruch 1, wobei die mehreren Bitebenen aus zumindest einer Ebene bestehen, die durch ein MSB gebildet ist, einer Ebene, die durch ein n-tes MSB gebildet ist und einer Ebene, die durch ein LSB gebildet ist.

8. Codierer nach Anspruch 7, wobei die Verarbeitung durchgeführt wird, wobei die MSB-Ebene am Datenkopf unter den mehreren Bitebenen angeordnet ist.

9. Codierer nach Anspruch 7, wobei MSB in der Ebene, die durch MSB gebildet ist, zeitlich oder räumlich gemäß einer vorgegebenen Regel angeordnet sind.

10. Codierer nach Anspruch 7, wobei die zweite Codiereinrichtung eine Codierung durchführt, wobei alle Daten in der Ebene, die durch MSB gebildet ist, zu "0" gemacht werden, wenn es keine Ebene gibt, die durch MSB gebildet ist.

11. Codierer nach Anspruch 7, wobei zumindest eine Information, die die Tatsache anzeigt, daß die Anzahl von Zuteilungsbits zur Quantisierung "0" ist, anstelle der Ebene geliefert wird, die durch MSB gebildet ist, wenn es keine Ebene gibt, die durch MSB gebildet ist.

12. Codierer nach Anspruch 7, wobei die zweite Codiereinrichtung die Codierung zumindest auf der Basis der Informationsfolge der Ebene durchgeführt wird, die durch MSB gebildet ist, und der Ebene, die durch LSB gebildet ist.

13. Decodierer, mit:
einer Fehlerkorrektureinrichtung (8), um eine Fehlerkorrektur auf der Basis eines Fehlerkorrekturscodes durchzuführen, der zur Eingangspixelinformation hinzugefügt ist;
einer ersten Decodiereinrichtung (9), um ein Ausgangssignal der Fehlerkorrektureinrichtung durch ein erstes Verfahren zu decodieren, um eine Datendekompression auszuüben, wobei das erste Verfahren eine variable Längendecodierung ist, bei dem Decodierparameter verwendet werden, die in Abhängigkeit davon variieren, welche Bitebene decodiert wird;
einer Umsetzungseinrichtung (10), um die Pixelinformation von mehreren Pixelebenen, die durch die erste Decodiereinrichtung dekomprimiert wurden, in Blockdaten und Dynamikbereichsdaten umzusetzen; und
einer zweiten Decodiereinrichtung (11), um ein Ausgangssignal der Umsetzungseinrichtung durch ein zweites Verfahren zu decodieren, um eine Datendekompression auszuführen und um dadurch die ursprüngliche Bildinformation zu erhalten, wobei das zweite Verfahren, welches in der zweiten Decodiereinrichtung verwendet wird, Blockdaten verwendet, und Dynamikbereichsdaten, die durch die Umsetzungseinrichtung (10) geliefert werden.

14. Decodierer nach Anspruch 13, wobei das erste Verfahren, welches in der ersten Decodiereinrichtung verwendet wird, das Decodieren einer Information ist, die für eine fortlaufende Pixelinformationslänge codiert wurde.

15. Decodierer nach Anspruch 13, wobei das erste Verfahren, welches in der ersten Decodiereinrichtung verwendet wird, das Decodieren einer Information ist, die codiert wurde, wobei eine statistische Eigenschaft einer Pixelinformation verwendet wird.

16. Decodierer nach Anspruch 13, wobei die mehreren Bitebenen, die durch Decodieren in der ersten Decodiereinrichtung erhalten werden, durch Bitverschiebung gebildet sind.

17. Decodierer nach Anspruch 13, wobei die mehreren Bitebenen, die durch Decodieren in der ersten Decodiereinrichtung erhalten werden, in jedem Block erzeugt werden, der durch eine vorgegebene Anzahl von Pixeln gebildet ist.

18. Decodierer nach Anspruch 13, wobei die mehreren Bitebenen, die durch Decodieren in der ersten Decodiereinrichtung erhalten werden, in einer Rahmeneinheit erzeugt werden.

19. Decodierer nach Anspruch 13, wobei die mehreren Bitebenen, die durch Decodieren in der ersten Decodiereinrichtung erhalten werden, aus zumindest einer Ebene bestehen, die durch MSB gebildet ist, einer Ebene, die durch n-te MSB gebildet ist, und einer Ebene, die durch LSB gebildet ist.

20. Decodierer nach Anspruch 19, wobei die codierte Information, die der Ebene entspricht, die durch MSB gebildet ist, zuerst in einem und im gleichen Block oder in einem oder dem gleichen Rahmen durch die erste Decodiereinrichtung decodiert wird.

21. Decodierer nach Anspruch 19, wobei die MSB in der Ebene, die durch MSB in den mehreren Ebenen gebildet ist, die durch die erste Decodiereinrichtung decodiert wird, zeitlich oder räumlich gemäß einer vorgegebenen Regel angeordnet sind.

22. Decodierer nach Anspruch 19, wobei zumindest die Tatsache, daß die Anzahl von Zuteilungsbits für die Quantisierung "0" ist, auf der Decodiererseite erkannt wird, wenn Daten in der Ebene, die durch MSB gebildet sind, die durch Decodieren in der ersten Codiereinrichtung erhalten werden, alle "0" sind.

23. Decodierer nach Anspruch 19, wobei zumindest eine Information, die die Tatsache anzeigt, daß die Anzahl von Zuteilungsbits für die Quantisierung "0" ist, gegeben ist und erkannt wird, wenn es keine Information gibt, die der Ebene entspricht, die durch MSB gebildet ist, die durch die erste Decodiereinrichtung zu decodieren ist.

24. Decodierer nach Anspruch 19, wobei die zweite Decodiereinrichtung das Decodieren auf der Basis der Informationsfolge von zumindest der Ebene, die durch MSB gebildet ist, und der Ebene, die durch LSB gebildet ist, durchführt, unter den mehreren Ebenen, die durch Decodieren in der ersten Decodiereinrichtung erhalten werden.

## Revendications

1. Codeur comprenant :
des premiers moyens de codage (2) pour coder des informations de pixels par un premier procédé pour effectuer la compression de données, ledit premier procédé utilisé dans lesdits premiers moyens de codage consistant à calculer une gamme dynamique déterminée sur la base des valeurs maximales (MAX) et minimales (MIN) d'une pluralité de pixels contenus dans un bloc bidimensionnel et à coder lesdites informations de pixels avec une longueur de bits variable adaptée à la gamme dynamique ;
des moyens de division (3) pour diviser les informations de pixels codées par lesdits premiers moyens de codage en une pluralité de plans de bits ;
des moyens d'addition de code de correction d'erreurs (5) pour ajouter un code de correction d'erreurs aux informations d'image codées ; caractérisé par
des seconds moyens de codage (4) pour effectuer le codage par un second procédé pour effectuer la compression de données à chacun d'une pluralité de plans de bits générés par lesdits moyens de division, ledit second procédé consistant à effectuer un codage à longueur variable et à utiliser des paramètres de codage qui varient en fonction du plan de bits qui est codé ; et caracterisé en ce que ledit code de correction d'erreurs est ajouté auxdites données d'image codées compressées par lesdits seconds moyens de codage.

2. Codeur selon la revendication 1, dans lequel ledit second procédé utilisé dans lesdits seconds moyens de codage consiste à coder pour une longueur continue d'informations de pixels.

3. Codeur selon la revendication 1, dans lequel ledit second procédé utilisé dans lesdits seconds moyens de codage consiste à coder en utilisant la caractéristique statistique des informations de pixels.

4. Codeur selon la revendication 1, dans lequel la génération desdits plans de bits est exécutée à chaque bloc constitué d'un nombre prédéterminé de pixels.

5. Codeur selon la revendication 1, dans lequel la génération desdits plans de bits est exécutée au niveau d'une unité de trame.

6. Codeur selon la revendication 1, dans lequel un décalage de bit est effectué au moment de la génération desdits plans de bits.

7. Codeur selon la revendication 1, dans lequel ladite pluralité de plans de bits est composée d'au moins un plan constitué par un bit le plus significatif, d'un plan constitué par des n-ièmes bits les plus significatifs et d'un plan constitué par un bit le moins significatif.

8. Codeur selon la revendication 7, dans lequel le traitement est effectué avec ledit plan du bit le plus significatif agencé en tête parmi ladite pluralité de plans de bits.

9. Codeur selon la revendication 7, dans lequel les bits les plus significatifs dans ledit plan constitué par les bits les plus significatifs sont agencés en termes de temps ou d'espace selon une règle prédéterminée.

10. Codeur selon la revendication 7, dans lequel lesdits seconds moyens de codage effectuent le codage avec toutes les données dans ledit plan constitué par le bit le plus significatif étant "0" lorsqu'il n'y a aucun plan constitué par les bits les plus significatifs.

11. Codeur selon la revendication 7, dans lequel au moins les informations indiquant le fait que le nombre des bits d'affectation pour la quantification est "0" sont sorties au lieu dudit plan constitué par les bits les plus significatifs lorsqu'il n'y a pas de plan constitué par les bits les plus significatifs.

12. Codeur selon la revendication 7, dans lequel lesdits seconds moyens de codage effectuent le codage au moins en se basant sur la séquence d'informations dudit plan constitué par les bits les plus significatifs et dudit plan constitué par les bits les moins significatifs.

13. Décodeur comprenant :
des moyens de correction d'erreurs (8) pour exécuter la correction d'erreurs en se basant sur un code de correction d'erreurs ajouté aux informations de pixels d'entrée ;
des premiers moyens de décodage (9) pour décoder une sortie desdits moyens de correction d'erreurs par un premier procédé pour effectuer la décompression de données, ledit premier procédé étant le décodage à longueur variable utilisant des paramètres de décodage qui varient en fonction du plan de bits décodé ;
des moyens de conversion (10) pour assembler les informations de pixels d'une pluralité de plans de bits décompressés par lesdits premiers moyens de décodage en données de blocs et en données de gamme dynamique ; et
des seconds moyens de décodage (11) pour décoder une sortie desdits moyens de conversion par un second procédé pour effectuer la décompression de données et pour, de ce fait, obtenir les informations d'image d'origine, ledit second procédé utilisé dans lesdits seconds moyens de décodage utilisant les données de blocs et les données de gamme dynamique délivrées par lesdits moyens de conversion (10).

14. Décodeur selon la revendication 13, dans lequel ledit premier procédé utilisé dans lesdits premiers moyens de décodage décode les informations codées pour une longueur continue des informations de pixels.

15. Décodeur selon la revendication 13, dans lequel ledit premier procédé utilisé dans lesdits premiers moyens de décodage décode les informations codées en utilisant la caractéristique statistique des informations de pixels.

16. Décodeur selon la revendication 13, dans lequel ladite pluralité de plans de bits obtenus par le décodage dans lesdits premiers moyens de décodage sont formés par décalage de bit.

17. Décodeur selon la revendication 13, dans lequel ladite pluralité de plans de bits obtenus par le décodage dans lesdits premiers moyens de décodage sont générés à chaque bloc constitué par un nombre prédéterminé de pixels.

18. Décodeur selon la revendication 13, dans lequel ladite pluralité de plans de bits obtenus par le décodage dans lesdits premiers moyens de décodage sont générés au niveau d'une unité de trame.

19. Décodeur selon la revendication 13, dans lequel ladite pluralité de plans de bits obtenus par le décodage dans lesdits premiers moyens de décodage sont constitués d'au moins un plan constitué par les bits les plus significatifs, un plan constitué par les n-ièmes bits les plus significatifs et un plan constitué par les bits les moins significatifs.

20. Décodeur selon la revendication 19, dans lequel les informations codées correspondant audit plan constitué par les bits les plus significatifs sont décodées d'abord dans un seul et même bloc ou dans une seule et même trame par lesdits premiers moyens de décodage.

21. Décodeur selon la revendication 19, dans lequel les bits les plus significatifs dans ledit plan constitué par le bit le plus significatif dans ladite pluralité de plans décodés par lesdits premiers moyens de décodage sont agencés en termes de temps ou d'espace selon une règle prédéterminée.

22. Décodeur selon la revendication 19, dans lequel au moins le fait que le nombre des bits d'affectation pour la quantification est "0" est reconnu du côté du décodeur lorsque les données dans ledit plan constitué par les bits les plus significatifs obtenu par le décodage dans lesdits premiers moyens de décodage sont toutes "0".

23. Décodeur selon la revendication 19, dans lequel au moins les informations indiquant le fait que le nombre des bits d'affectation pour la quantification est "0" sont données et reconnues lorsqu'il n'y a pas d'informations correspondant audit plan constitué par les bits les plus significatifs à décoder par lesdits premiers moyens de décodage.

24. Décodeur selon la revendication 19, dans lequel lesdits seconds moyens de décodage effectuent le décodage en se basant sur la séquence d'informations au moins dudit plan constitué par les bits les plus significatifs et dudit plan constitué par les bits les moins significatifs parmi ladite pluralité de plans obtenus par le décodage dans lesdits premiers moyens de décodage.
